# EUROPEAN PATENT APPLICATION

(11) **EP 4 274 000 A1**
(43) Date of publication of application: **08.11.2023**
(21) Application number: 22207687.9
(22) Date of filing: 16.11.2022
(51) Int. Cl.: H01M 10/613, H01M 10/625, H01M 10/653, H01M 10/6572, H01M 50/207, H01M 50/242, H01M 50/249, H01M 50/264, H01M 50/291, H01M 50/293, H01M 50/296, H01M 50/30, H01M 10/655, H01M 10/658, H01M 50/209

(54) **BATTERY PACK AND ASSEMBLY METHOD FOR BATTERY PACK**

(30) Priority: 06.05.2022 CN 202210489695
(71) Applicant: CALB Co., Ltd., Changzhou City, Jiangsu Province (CN)
(72) Inventor: WANG, Shuaifeng, Changzhou City, Jiangsu Province (CN); YANG, Xulong, Changzhou City, Jiangsu Province (CN); JIANG, Xinwei, Changzhou City, Jiangsu Province (CN)
(74) Representative: Becker, Eberhard

(57) **Abstract**

The disclosure provides a battery pack and an assembly method for the battery pack. The battery pack includes a battery box (10) and a battery (20). The battery (20) is disposed in the battery box (10), and the battery box (10) includes a main frame (11) and a clamping member. The main frame (11) includes a support portion (111). The clamping member is connected to the main frame (11), and at least a part of the battery (20) is located between the clamping member and the support portion (111), such that the clamping member and the support portion (111) fix the battery (20).

## Description

### BACKGROUND

### Technical Field

The present disclosure relates to the technical field of batteries, in particular to a battery pack and an assembly method for battery pack.

### Description of Related Art

In the related art, a battery pack may include a plurality of batteries, and the batteries may be arranged in a battery box. In the use process of the battery pack, vibration might occur due to the bumping of the vehicle, which affects the safety performance of the battery.

### SUMMARY

The present disclosure provides a battery pack and an assembly method for battery pack to improve the performance of the battery pack.

In a first aspect of the present disclosure, a battery pack is provided. The battery pack includes a battery box and a battery. The battery is disposed in the battery box, and the battery box includes a main frame and a clamping member. The main frame includes a support portion. The clamping member is connected to the main frame, and at least a part of the battery is located between the clamping member and the support portion, such that the clamping member and the support portion fix the battery.

In a second aspect of the present disclosure, an assembly method for a battery pack is provided. The assembly method includes the following steps. Placing the battery on the support portion of the main frame, and connecting the clamping member to the main frame, such that at least a part of the battery is located between the clamping member and the support portion, and the battery is fixed through the clamping member and the support portion.

In a third aspect of the present disclosure, an assembly method for a battery pack is provided. The assembly method includes the following steps. Placing the battery on the clamping member, and connecting the main frame to the clamping member, such that at least a part of the battery is located between the clamping member and the support portion of the main frame, and that the battery is fixed through the clamping member and the support portion.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural view of a battery pack according to a first exemplary embodiment.
FIG. 2 is a schematic structural view of a battery pack according to a second exemplary embodiment.
FIG. 3 is a schematic structural view of a battery pack according to a third exemplary embodiment.
FIG. 4 is a schematic structural view of a battery pack according to a fourth exemplary embodiment.
FIG. 5 is a schematic structural view of a battery pack according to a fifth exemplary embodiment.
FIG. 6 is a partial structural view of a battery pack according to a sixth exemplary embodiment.
FIG. 7 is a partial structural view of a battery pack according to a seventh exemplary embodiment.
FIG. 8 is a schematic flowchart of an assembly method for a battery pack according to an exemplary embodiment.
FIG. 9 is a schematic flowchart of an assembly method for a battery pack according to another exemplary embodiment.
FIG. 10 is a partial structural view of a battery pack according to another exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

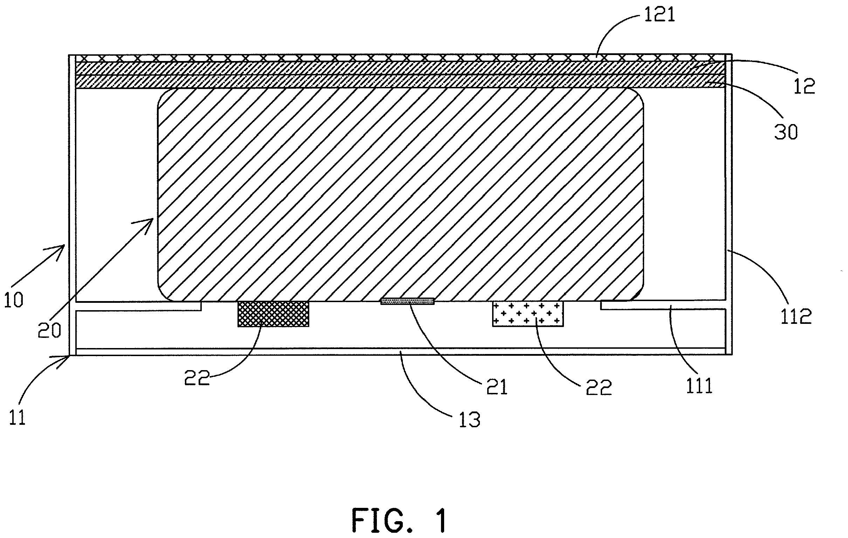

An embodiment of the present disclosure provides a battery pack. Please refer to FIG. 1 to FIG. 7, the battery pack includes a battery box 10 and a battery 20. The battery 20 is provided in the battery box 10, and the battery box 10 includes a main frame 11 and a clamping member. The main frame 11 includes a support portion 111. The clamping member is connected to the main frame 11, and at least a part of the battery 20 is located between the clamping member and the support portion 111, such that the clamping member and the support portion 111 fix the battery 20.

The battery pack in an embodiment of the present disclosure includes a battery box 10, a battery 20 and a clamping member, and the battery 20 is arranged in the battery box 10. By arranging the battery 20 between the clamping member and the support portion 111, the battery 20 may be fixed through the clamping member and the support portion 111, so as to improve the connection strength between the battery 20 and the battery box 10, and avoid the battery 20 from shaking, thereby improving the use performance of the battery pack.

The battery 20 includes a cell and an electrolyte, which is the minimum unit capable of performing electrochemical reactions such as charging/discharging. The cell refers to a unit formed by winding or laminating a stack portion including a first electrode, a separator and a second electrode. When the first electrode is a positive electrode, the second electrode is a negative electrode, and the polarities of the first electrode and the second electrode are interchangeable.

It should be noted that, the main frame 11 does not include the top cover and bottom plate of the battery box in the related art, and the main frame 11 may be regarded as a structure arranged around the battery 20. The main frame 11 may form a sealed battery accommodating space with the top cover and the bottom plate in the related art, so as to achieve effective protection for the battery 20.

In an embodiment, as shown in FIG. 1 to FIG. 4, the battery box 10 further includes a bottom plate 13. The bottom plate 13 is connected to the main frame 11, the support portion 111 is located between the clamping member and the bottom plate 13, and the battery 20 is disposed on the support portion 111, thereby realizing reliable support for the battery 20, and allowing the support portion 111 and the clamping member to fix the battery 20 securely.

In an embodiment, as shown in FIG. 1 to FIG. 4, the battery 20 includes a pressure relief structure 21, and the pressure relief structure 21 is disposed toward the bottom plate 13. The pressure relief structure 21 and the bottom plate 13 are arranged at intervals, so as to ensure that the pressure relief structure 21 may be broken through when the pressure inside the battery 20 reaches a certain level. In this manner, the gas may be discharged from the inside of the battery 20, thereby avoiding safety problems.

It should be noted that the pressure relief structure 21 of the battery 20 may be a pressure relief structure in the related art, such as an explosion-proof film, an explosion-proof valve and other structures, the disclosure is not limited thereto.

In an embodiment, as shown in FIG. 1 to FIG. 4, the battery 20 further includes a terminal assembly 22. The terminal assembly 22 and the pressure relief structure 21 are located on the same side of the battery 20, and one side of the battery 20 provided with the pressure relief structure 21 and the terminal assembly 22 is disposed on the support portion 111. The terminal assembly 22 and the bottom plate 13 are arranged at intervals to ensure a safety distance between the terminal assembly 22 and the bottom plate 13 and prevent the bottom plate 13 from damaging the terminal assembly 22.

The main frame 11 may include two openings opposite to each other, and a temperature adjustment plate 12 or a top cover 14 may block the first opening of the main frame 11, and the first opening may face the passenger compartment of a vehicle. The bottom plate 13 may block the second opening of the main frame 11, and the pressure relief structure 21 and the terminal assembly 22 of the battery 20 both face the bottom plate 13. In this manner, it is possible to prevent the gas discharged from the pressure relief structure 21 from being directly sprayed toward the first opening. To a certain extent, it is possible to prevent thermal runaway from occurring to the battery 20 to cause safety problems. Moreover, since the pressure relief structure 21 and the terminal assembly 22 face the bottom plate 13, while ensuring a certain gap is formed between the battery 20 and the bottom plate 13, the pressure relief structure 21 and the terminal assembly 22 may make reasonable use of the gap, thereby increasing the space utilization of the battery box 10.

At present, in order to improve the energy density of batteries, cathode materials with high nickel content are selected in most cases. In ternary materials, such as nickel-cobalt-manganese materials, the nickel content accounts for more than 60 wt%, which is normally called high-nickel materials. While the energy density is improved, the heat of thermal runaway of a battery using high nickel materials can be as high as 1000°C or higher, which is greater than the melting point of the current common materials, such as aluminum and steel, adopted for the top cover 14. Therefore, the gas caused by thermal runaway will burn through the top cover 14 and directly affect the passenger compartment, thereby causing great safety hazards. By arranging the pressure relief structure 21 and the terminal assembly 21 toward the bottom plate 13, it is possible to avoid the impact on the passenger compartment to a large extent when thermal runaway occurs, and protect the safety of passengers. Typically, the terminal assembly 22 is connected with a bus bar to realize the electrical connection between the batteries 20. However, in order to ensure the safety performance of the battery pack, a certain electrical gap is normally left between the battery box 10 and the bus bar. By arranging both the pressure relief structure 21 and the terminal assembly 22 to face the bottom plate 13, while ensuring a certain gap between the battery body 20 and the bottom plate 13, the pressure relief structure 21 and the terminal assembly 22 may make reasonable use of the gap, thereby increasing the space utilization of the battery box 10.

It should be noted that, the temperature adjustment plate 12 or the top cover 14 may block the first opening of the main frame 11, and the pressure relief structure 21 and the terminal assembly 22 of the battery 20 are both disposed toward the bottom plate 13, that is, when thermal runaway occurs to the battery 20, the pressure relief structure 21 is destroyed, so that the gas inside the battery 20 is ejected. Under the circumstances, the ejected gas may be directly sprayed to the bottom plate 13, and when the gas flows to the temperature adjustment plate 12 or the top cover 14, both heat and pressure will be decreased to a certain extent, at this time, the damage caused by the gas to the temperature adjustment plate 12 or the top cover 14 will be reduced, and the first opening of the main frame 11 is arranged toward the passenger compartment of the vehicle, such that it is possible to prevent the gas ejected from the pressure relief structure 21 from being directly ejected into the passenger compartment, thereby improving the safety performance of the vehicle.

The bottom plate 13 of the battery pack must meet the ball hitting standard. Under the circumstances, there is a gap between the battery 20 and the bottom plate 13 to ensure anti-collision and buffering. When the terminal assembly 22 faces the bottom plate 13, this gap may perfectly serve as a safety gap between the terminal assembly 22 and the battery box 10, so that the space of the battery box 10 is reasonably utilized to improve the space utilization of the battery box 10.

In an embodiment, the distance between the support portion 111 and the bottom plate 13 is 0 mm to 20 mm, which not only enables the support portion 111 to effectively support the battery 20, but also enables a safety gap to be formed between the terminal assembly 22 and the bottom plate 13.

When the distance between the support portion 111 and the bottom plate 13 is 0, the thickness of the support portion 111 may provide a safety gap between the terminal assembly 22 and the bottom plate 13. Alternatively, the thickness of the support portion 111 and the structure disposed between the support portion 111 and the battery 20 provide a safety gap between the terminal assembly 22 and the bottom plate 13. For example, the support portion 111 and the buffer portion 40 provide a safety gap between the terminal assembly 22 and the bottom plate 13.

In an embodiment, the distance between the support portion 111 and the bottom plate 13 may be 5 mm to 15 mm, which not only enables the support portion 111 to effectively support the battery 20, but also enables a safety gap to be formed between the terminal assembly 22 and the bottom plate 13. Moreover, it is possible to prevent the distance between the terminal assembly 22 and the bottom plate 13 from being too large to affect the space utilization of the battery box 10.

In some embodiments, the distance between the support portion 111 and the bottom plate 13 may be 0, 0.1mm, 0.2mm, 0.5mm, 1mm, 1.5mm, 2mm, 2.5mm, 3mm, 3.5mm, 4mm, 4.5mm, 4.6mm, 4.8mm, 4.9mm, 5mm, 5.1mm, 5.2mm, 5.5mm, 6mm, 6.5mm, 7mm, 8mm, 9mm, 10mm, 11mm, 12mm, 13mm, 14mm, 14.5mm, 14.9mm, 15mm, 15.1mm, 15.5mm, 16mm, 17mm, 17.5mm, 18mm, 19mm, 19.5mm, 19.6mm, 19.7mm, 19.8mm, 19.9mm, or 20mm, etc.

In an embodiment, the support portion 111 and the battery 20 may be bonded together, a thermally conductive structural adhesive may be provided between the support portion 111 and the battery 20, and the support portion 111 and the battery 20 may be bonded through the thermally conductive structural adhesive, which not only ensures the strength of the connection, and the thermally conductive structural adhesive may realize heat transfer, so as to improve the heat dissipation capability of the battery 20.

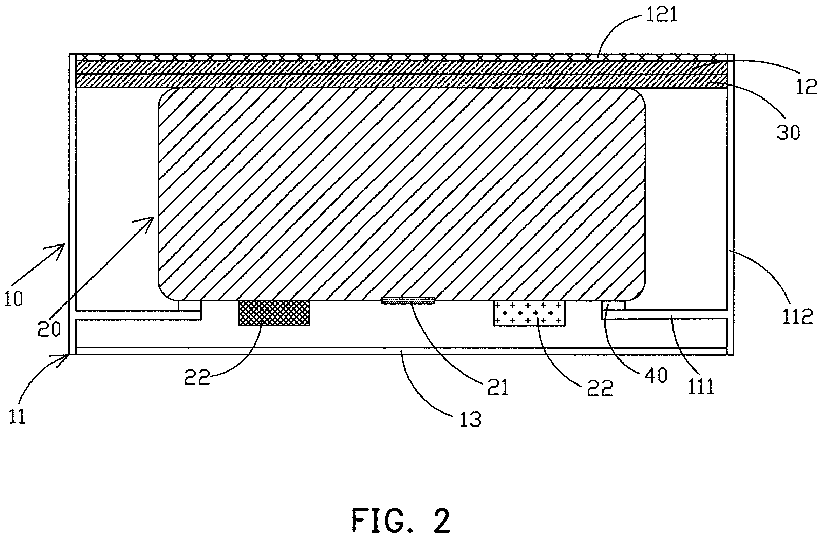

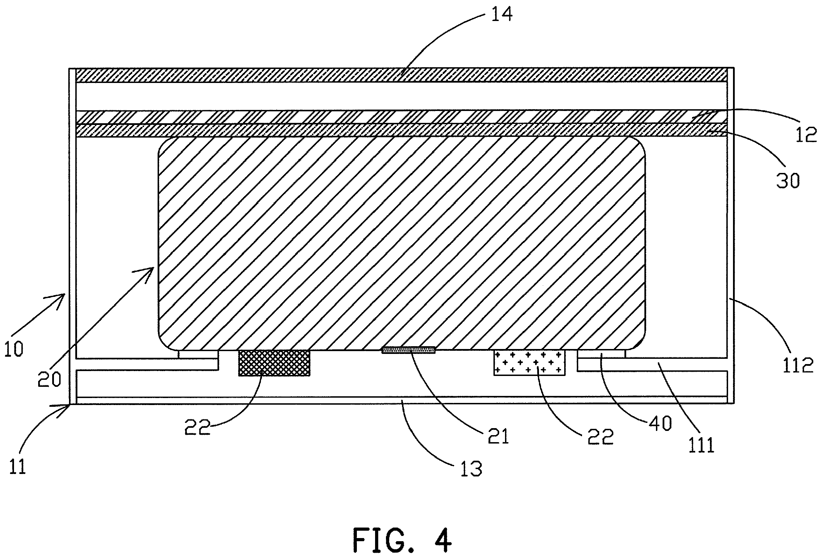

In an embodiment, as shown in FIG. 2 and FIG. 4, a buffer portion 40 is disposed between the support portion 111 and the battery 20, so as to provide a certain buffer function for the battery 20 and prevent the support portion 111 from damaging the battery 20. The buffer portion 40 may be a rubber pad, a foam pad, etc., which is not limited in the disclosure. The buffer portion 40 may be bonded to the support portion 111, and the battery 20 may be bonded to the buffer portion 40.

In an embodiment, the battery 20 and the support portion 111 are insulated to avoid safety problems. An insulating layer may be provided on the support portion 111, and the insulating layer may be a coating, such as a ceramic material like alumina (Al₂O₃), zirconia (ZrO₂) and so on.

In an embodiment, as shown in FIG. 1 to FIG. 5, the clamping member is a temperature adjustment plate 12, the temperature adjustment plate 12 is connected to the main frame 11, and at least a part of the battery 20 is located between the temperature adjustment plate 12 and the support portion 111, such that the temperature adjustment plate 12 and the support portion 111 may fix the battery 20. In this manner, the battery 20 may be fixed through the temperature adjustment plate 12 and the support portion 111, thereby improving the connection strength of the battery 20 and the battery box 10 and preventing the battery 20 from shaking, and the temperature adjustment plate 12 may reliably achieve heating or cooling of the battery 20.

In an embodiment, as shown in FIG. 1 to FIG. 4, the battery box 10 includes a main frame 11 and a temperature adjustment plate 12. The main frame 11 may include an upper side and a lower side, and the temperature adjustment plate 12 may be provided on the upper side of the main frame 11. Under circumstances, a support portion 111 is formed on the lower side of the main frame 11, such that the battery 20 is disposed on the support portion 111 and clamped between the temperature adjustment plate 12 and the support portion 111, so as to realize the reliable fixation of the battery 20. Further, the battery box 10 further includes a bottom plate 13, and the temperature adjustment plate 12 and the bottom plate 13 are respectively located on opposite sides of the main frame 11, that is, the bottom plate 13 is connected to the lower side of the main frame 11.

In an embodiment, the temperature adjustment plate 12 is in contact with the battery 20 so that the heating or cooling of the battery 20 may be efficiently achieved.

The temperature adjustment plate 12 and the battery 20 may be in direct contact, that is, the temperature adjustment plate 12 is attached to the battery 20. Under the circumstances, the temperature adjustment plate 12 may be used to rapidly heat or cool the battery 20.

In an embodiment, as shown in FIG. 1 and FIG. 2, the temperature adjustment plate 12 and the battery 20 may be in indirect contact. The battery pack further includes a heat conducting portion 30, and the heat conducting portion 30 is located between the temperature adjustment plate 12 and the battery 20, so that the temperature adjustment plate 12 is in contact with the battery 20 through the heat conducting portion 30, and that the heat transfer between the temperature adjustment plate 12 and the battery 20 may be realized through the heat conducting portion 30.

The heat conducting portion 30 may be a thermally conductive material in the related art. For example, the heat conducting portion 30 may include a graphene sheet, a thermally conductive silicone sheet, a thermally conductive silicone grease, etc., which is not limited in the disclosure.

In an embodiment, the heat conducting portion 30 between the temperature adjustment plate 12 and the battery 20 may be thermally conductive adhesive, which not only realizes heat transfer between the temperature adjustment plate 12 and the battery 20, but also realizes the reliable connection between the temperature adjustment plate 12 and the battery 20, so as to improve the stable performance of the battery 20. The heat conducting portion 30 can be thermally conductive structural adhesive, and the temperature adjustment plate 12 and the battery 20 are bonded through the thermally conductive structural adhesive, which can not only ensure the strength of the connection, but also can realize heat transfer, thereby improving the heat dissipation capability of the battery 20.

It should be noted that the temperature adjustment plate 12 may be a heat exchange structure in the related art, for example, the temperature adjustment plate 12 may be a liquid cooling plate. The temperature adjustment plate 12 includes a heat exchange channel, the heat exchange channel may be a fluid heat exchange channel, and the heat exchange channel may also be a gas heat exchange channel, so as to be used for cooling or heating the battery 20 inside the battery box 10.

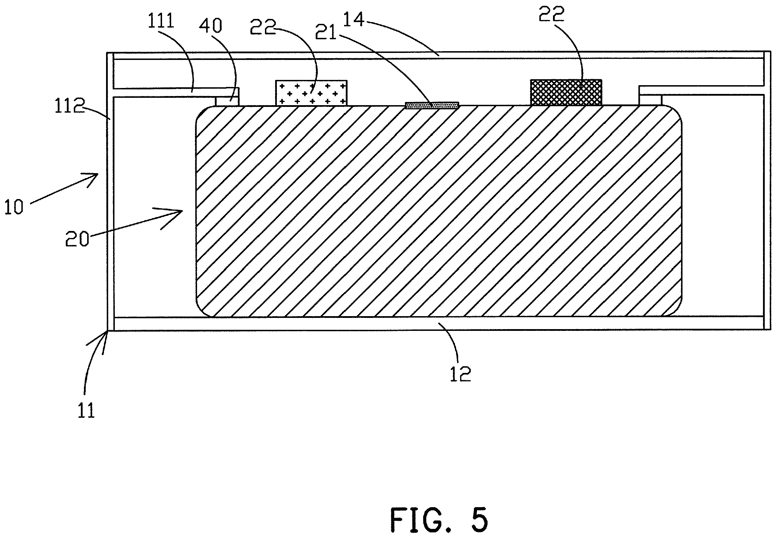

In an embodiment, as shown in FIG. 1 and FIG. 2, the temperature adjustment plate 12 may be used as the top cover of the battery box 10, that is, the battery box 10 may not include a top cover. Under the circumstances, one side of the temperature adjustment plate 12 facing away from the battery 20 may be provided with a thermal insulating layer 121, so as to ensure that the internal temperature of the battery box 10 is kept at a certain level, thereby avoiding the impact on the use performance of the battery pack when the ambient temperature is too low. When the ambient temperature is relatively high, since the temperature adjustment plate 12 has a heat exchange channel, the battery 20 may also be cooled reliably. The thermal insulating layer 121 may be thermal insulation cotton, which can not only perform a thermal insulation function, but also achieves a certain supporting effect. The thermal insulating layer 121 may be a coating, for example, directly coating or spraying thermal insulating material on the temperature adjustment plate 12 to form the thermal insulating layer 121. As such, not only can the thermal insulation effect be achieved, but also space may be saved. The specific material of the thermal insulating layer 121 is not limited in the disclosure, and may be selected according to actual needs. Alternatively, the temperature adjustment plate 12 may be used as the bottom plate of the battery box 10, that is, the battery box 10 may not include the bottom plate, as shown in FIG. 5.

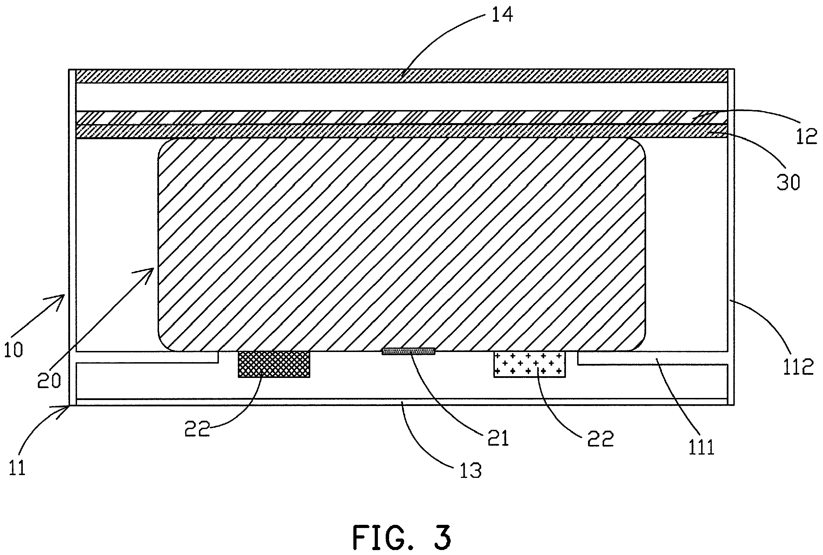

In an embodiment, as shown in FIG. 3 and FIG. 4, the battery box 10 further includes a top cover 14, the top cover 14 is disposed opposite to the temperature adjustment plate 12 and is connected to the main frame 11. The top cover 14 and the bottom plate 13 may be respectively connected to opposite ends of the main frame 11, and the temperature adjustment plate 12 is disposed close to the top cover 14, the top cover 14 may seal and protect the battery box 10.

The temperature adjustment plate 12 and the top cover 14 may be arranged at intervals, and a thermal insulating structure may be arranged between the temperature adjustment plate 12 and the top cover 14. For example, a thermal insulating cotton may be arranged between the temperature adjustment plate 12 and the top cover 14, and the thermal insulating cotton may serve the insulation and support functions. The temperature adjustment plate 12 and the top cover 14 may also be in direct contact, so as to improve the space utilization of the battery box 10.

In an embodiment, as shown in FIG. 1 to FIG. 4, the main frame 11 further includes a side beam 112, and the support portion 111 extends from the inner side of the side beam 112, so that the battery 20 may be reliably supported, and the heat of the battery 20 may be transmitted to the side beam 112 through the support portion 111.

The side beam 112 may form a space for accommodating the battery 20. Under the circumstances, the support portion 111 may be arranged in pairs, and the battery 20 is supported by the pair of support portions 111, that is, the side beam 112 may be provided with two support portions 111 opposite to each other. Meanwhile, the two support portions 111 are arranged at intervals, so as to achieve reliable support for the battery 20 and avoid the problem of excessive weight.

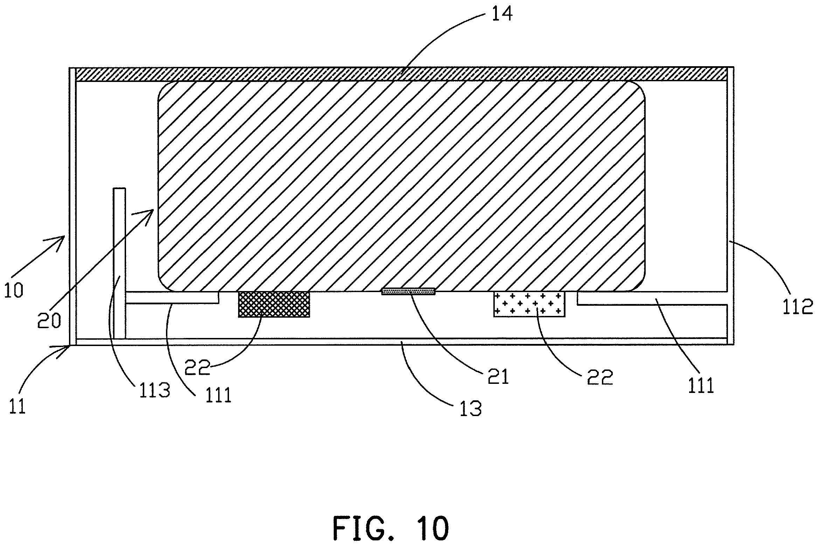

In an embodiment, as shown in FIG. 10, the main frame 11 further includes a partition beam 113. The partition beam 113 is located at the inner side of the side beam 112, and the support portion 111 extends from the partition beam 113. The support portion 111 on the side beam 112 is arranged opposite to the support portion 111 on the partition beam 113, thereby realizing reliable support for the battery 20.

The partition beam 113 may be arranged in the side beam 112, such that at least two independent spaces for accommodating the battery 20 are formed in the side beam 112. The support portion 111 may be arranged in pairs, and the battery 20 is supported by the pair of support portions 111, that is, the side beam 112 and the partition beam 113 may be provided with two support portions 111 opposite to each other. Meanwhile, the two support portions 111 are arranged at intervals, so as to achieve reliable support for the battery 20 and avoid the problem of excessive weight.

The number of partition beams 113 may be one or more, which is not limited in the disclosure.

In an embodiment, the support portion 111 and the side beam 112 are integrally formed, which not only has high structural strength, but also improves the forming efficiency of the support portion 111 and the side beam 112.

The support portion 111 and the partition beam 113 are integrally formed, which not only has high structural strength, but also improves the forming efficiency of the support portion 111 and the partition beam 113.

The support portion 111 on the side beam 112 may be an extruded profile, machined or die-cast integrally-formed structure. The support portion 111 on the partition beam 113 may be an extruded profile, machined or die-cast integrally-formed structure.

In an embodiment, the main frame 11 further includes a side beam 112 and a partition beam 113. The partition beam 113 is located at the inner side of the side beam 112, and a support portion 111 extends from the inner side of at least one of the side beam 112 and the partition beam 113, such that the battery 20 may be reliably supported, and the problem of excessive weight may be avoided. The battery 20 may be supported by one support portion 111, or the battery 20 may be supported by two support portions 111 opposite to each other.

It should be noted that there are multiple batteries 20, and there may be multiple support portions 111. The multiple batteries 20 are disposed on the multiple support portions 111, such that the respective support portions 111 can effectively support the respective batteries 20. Multiple support portions 111 are arranged at intervals. The support portion 111 may be a plate, and further, the support portion 111 may be a rectangular plate. The support portion 111 may be a plurality of independent rectangular plates extending from the main frame 11. There are multiple batteries 20, and the multiple batteries 20 may be provided on one support portion 111.

In an embodiment, the battery box 10 includes a main frame 11 and a temperature adjustment plate 12. The main frame 11 may include an upper side and a lower side. As shown in FIG. 5, the temperature adjustment plate 12 may be arranged on the lower side of the main frame 11. Under the circumstances, the support portion 111 is formed on the upper side of the main frame 11, such that the battery 20 is placed on the temperature adjustment plate 12 and clamped between the support portion 111 and the temperature adjustment plate 12, so as to realize the reliable fixing of the battery 20. Furthermore, the battery box 10 may include a top cover 14 connected to the upper side of the main frame 11.

As shown in FIG. 5, the battery 20 includes a pressure relief structure 21 and a terminal assembly 22. The terminal assembly 22 and the pressure relief structure 21 are located on the same side of the battery 20, and one side of the battery 20 provided with the pressure relief structure 21 and the terminal assembly 22 is disposed toward the top cover 14. Moreover, the support portion 111 may be press-fitted on the battery 20 through the buffer portion 40, and the bottom portion of the battery 20 is arranged on the temperature adjustment plate 12, so that at least a part of the battery 20 is located between the support portion 111 and the temperature adjustment plate 12.

In an embodiment, as shown in FIG. 5, a plurality of batteries 20 may be fixed within the battery box 10.

A plurality of batteries 20 may be formed into a battery module and then fixed in the battery box 10, and the plurality of batteries 20 may be fixed through the end plate and the lateral plate to form a battery module, which is finally disposed in the battery box 10. A plurality of batteries 20 may be independently fixed in the battery box 10, that is, there is no need to group a plurality of batteries 20, and under the circumstances, the end plate and the lateral plate may be removed.

A plurality of batteries 20 may be arranged inside the battery box 10, and the plurality of batteries 20 may be connected in series or in parallel through the bus bar. For example, the terminal assemblies 22 of two adjacent batteries 20 are connected through the bus bar. The battery 20 may include two terminal assemblies 22, which are respectively a positive terminal assembly and a negative terminal assembly.

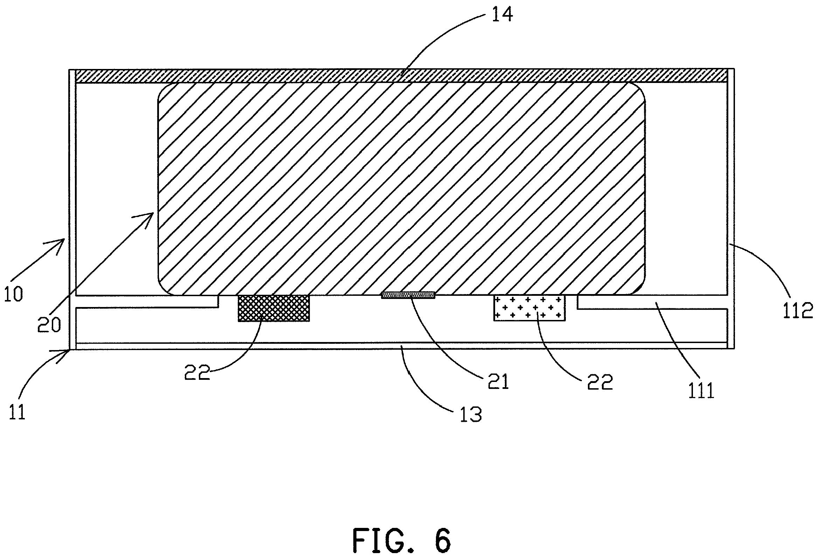

In an embodiment, as shown in FIG. 6, the clamping member is the top cover 14, the top cover 14 is connected to the main frame 11, and at least a part of the battery 20 is located between the top cover 14 and the support portion 111, so that the top cover 14 and the support portion 111 fix the battery 20. In this manner, the battery 20 may be reliably fixed between the top cover 14 and the support portion 111 to avoid problems such as shaking.

The top cover 14 may be in direct contact with the battery 20, or the top cover 14 may be in contact with the battery 20 through a buffer structure.

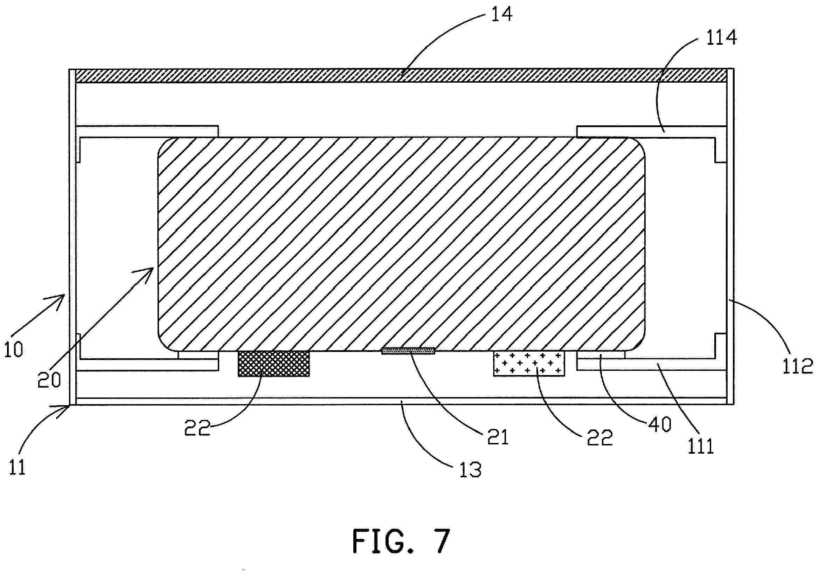

In an embodiment, as shown in FIG. 7, the clamping member is a platen member 114, the platen member 114 is connected to the main frame 11, and at least a part of the battery 20 is located between the platen member 114 and the support portion 111, so that the platen member 114 and the support portion 111 fix the battery 20. In this manner, the battery 20 may be reliably fixed to the platen member 114 and the support portion 111 to avoid problems such as shaking.

The platen member 114 may be a structure extending from the main frame 11. For example, the platen member 114 may be a part of the main frame 11. Under the circumstances, it is necessary to ensure that the battery 20 can be arranged between the platen member 114 and the support portion 111. If The support portion 111 is also a part of the main frame 11, it is necessary to ensure that the distance between the platen member 114 and the support portion 111 is not smaller than the battery 20, so that the battery 20 may be arranged between the platen member 114 and the support portion 111, and the battery 20 may be connected to the platen member 114 and the support portion 111 by means of adhesive or the like. Alternatively, at least one of the platen member 114 and the support portion 111 may be movably disposed relative to the main frame 11, so as to adjust the distance between the platen member 114 and the support portion 111. In this manner, it is possible to facilitate the battery 20 to be reliably arranged between the platen member 114 and support portion 111.

In an embodiment, as shown in FIG. 7, the main frame 11 is connected to the top cover 14. In some embodiments, it is not excluded that the platen member 114 and the top cover 14 are further provided with a temperature adjustment plate 12, and the temperature adjustment plate 12 may also be in contact with the battery 20 through the heat conducting portion 30.

In an embodiment, the platen member 114 is adjustably arranged relative to the position of the main frame 11, so as to adjust the distance between the platen member 114 and the support portion 111. As such, it can be ensured that the battery 20 is easily disposed between the platen member 114 and the support portion 111, and the reliable fixing of the battery 20 may be achieved by adjusting the position of the platen member 114 subsequently.

The main frame 11 may be provided with a plurality of connection positions, so that the platen member 114 may be selectively connected to the corresponding connection position, so as to adjust the distance between the platen member 114 and the support portion 111. For example, the platen member 114 and the main frame 11 may be connected through bolts. Under the circumstances, the platen member 114 or the main frame 11 may be provided with strip holes, so that the position of the platen member 114 may be adjusted.

The platen member 114 may be a substantially L-shaped configuration.

In an embodiment, the platen member 114 is detachably connected to the main frame 11, so as to prevent the platen member 114 from interfering with the configuration of the battery 20, thereby improving the assembly efficiency of the battery 20. During the process of arranging the battery 20, the main frame 11 may not be provided with the platen member 114, but the platen member 114 may be connected to the main frame 11 after the battery 20 is assembled. The platen member 114 and the main frame 11 may be connected through bolts.

In an embodiment, the support portion 111 and at least a part of the main frame 11 are an integrally formed structure, which not only has a simple structure, but also improves the stability of the structure and the assembly efficiency of the battery pack.

In an embodiment, the support portion 111 is detachably connected to the main frame 11, so as to facilitate the replacement of the support portion 111 and facilitate the molding of the support portion 111. The support portion 111 may be substantially L-shaped.

It should be noted that, at least one of the support portion 111 and the platen member 114 is detachably connected to the main frame 11, and not only can the distance between the support portion 111 and the platen member 114 be adjusted, in some embodiments, it is not excluded that the height of the main frame 11 may be reduced, so that the support portion 111 and/or the platen member 114 may make up for the height of the main frame 11. As such, the manufacturing cost and the overall weight of the main frame 11 may be reduced, and the support portion 111 or the platen member 114 may be made of a thin plate with a thinner thickness.

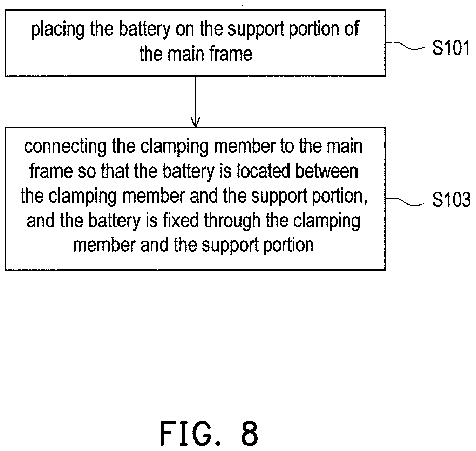

An embodiment of the present disclosure further provides an assembly method for a battery pack, please refer to FIG. 8. The assembly method for the battery pack includes the following steps.

S101, placing the battery 20 on the support portion 111 of the main frame 11.

S103, connecting the clamping member to the main frame 11 so that at least a part of the battery 20 is located between the clamping member and the support portion 111, and the battery 20 is fixed through the clamping member and the support portion 111.

In an assembly method for a battery pack in an embodiment of the disclosure, by arranging the battery 20 between the clamping member and the support portion 111, the battery 20 may be fixed through the clamping member and the support portion 111, so as to improve the connection strength between the battery 20 and the battery box 10, and avoid the battery 20 from shaking, so as to improve the use performance of the battery pack.

It should be noted that the main frame 11 is provided with a support portion 111. When the battery 20 is assembled, the battery 20 is placed on the support portion 111, and the clamping member is subsequently connected to the main frame 11, so that the position of the battery 20 is limited between the clamping member and the support portion 111 to achieve reliable fixation of the battery 20. The clamping member is connected to the main frame 11, which does not specifically mean that the clamping member is separated from the main frame 11 before the battery 20 is placed on the support portion 111 of the main frame 11. It may also be regarded that the clamping member has been connected to the main frame 11, and the subsequent operation is simply position adjustment and so on. In this manner, the fixed connection between the clamping member and the main frame 11 may be realized.

In an embodiment, the assembly method for the battery pack further includes: connecting the bottom plate 13 to one side of the main frame 11 away from the clamping member, so that the bottom plate 13 may reliably protect the battery 20.

In an embodiment, the assembly method for the battery pack further includes: before connecting the bottom plate 13 to one side of the main frame 11 away from the clamping member, inverting the main frame 11 and the clamping member, so that the opening of the main frame 11 faces upward; and the bottom plate 13 blocks the opening of the main frame 11.

When connecting the clamping member to the main frame 11, the first opening of the main frame 11 faces upward, and when connecting the bottom plate 13, the second opening of the main frame 11 needs to face upward to facilitate the connection of the bottom plate 13. During the inversion of the main frame 11 and the clamping member, since the battery 20 is fixed between the clamping member and the support portion 111, no positional change will occur.

In an embodiment, the assembly method for the battery pack further includes: contacting the battery 20 with the support portion 111 through the buffer portion 40, so as to provide a certain buffering function for the battery 20 and prevent the support portion 111 from damaging the battery 20. The buffer portion 40 may be a rubber pad, a foam pad, etc., which is not limited in the disclosure. The buffer portion 40 may be bonded to the support portion 111, and the battery 20 may be bonded to the buffer portion 40.

In an embodiment, the step of placing the battery 20 on the support portion 111 of the main frame 11 includes: placing one side of the battery 20 provided with the pressure relief structure 21 and the terminal assembly 22 on the support portion 111, so that the pressure relief structure 21 may be spaced apart from the bottom plate 13. In this manner, it may be ensured that the pressure relief structure 21 can be broken through when the pressure inside the battery 20 reaches a certain level. As such, the gas may be discharged from the inside of the battery 20 to avoid safety problems, and it is possible for the terminal assembly 22 and the bottom plate 13 to be arranged at intervals, so as to ensure a safety distance between the terminal assembly 22 and the bottom plate 13 and prevent the bottom plate 13 from damaging the terminal assembly 22.

In an embodiment, the temperature adjustment plate 12 serves as the clamping member, and the temperature adjustment plate 12 is connected to the main frame 11, so that at least a part of the battery 20 is located between the temperature adjustment plate 12 and the support portion 111, and the battery 20 is fixed through the temperature adjustment plate 12 and the support portion 111, thereby improving the connection strength of the battery 20 and the battery box 10. In this manner, it is possible to prevent the battery 20 from shaking, and the temperature adjustment plate 12 can heat or cool the battery 20 reliably.

In an embodiment, the assembly method for the battery pack further includes: connecting the bottom plate 13 to one side of the main frame 11 away from the temperature adjustment plate 12, so that the temperature adjustment plate 12 and the bottom plate 13 seal the main frame 11, and the battery 20 may be protected reliably.

In an embodiment, the assembly method for the battery pack further includes: before connecting the bottom plate 13 to one side of the main frame 11 away from the temperature adjustment plate 12, the main frame 11 and the temperature adjustment plate 12 are inverted, so that the opening of the main frame 11 faces upward; and the bottom plate 13 blocks the opening of the main frame 11.

When the temperature adjustment plate 12 is connected to the main frame 11, the first opening of the main frame 11 faces upward, and when connecting the bottom plate 13, the second opening of the main frame 11 needs to face upward, so as to facilitate the connection of the bottom plate 13. During the inversion of the main frame 11 and the temperature adjustment plate 12, since the battery 20 is fixed between the temperature adjustment plate 12 and the support portion 111, no positional change will occur.

In an embodiment, the assembly method for the battery pack further includes: before connecting the bottom plate 13 to one side of the main frame 11 away from the temperature adjustment plate 12, adjacent batteries 20 are connected through bus bars to realize direct series connection or parallel connection of the batteries 20.

In an embodiment, the assembly method for the battery pack further includes: contacting the temperature adjustment plate 12 with the battery 20 through the heat conducting portion 30, so that heat transfer between the temperature adjustment plate 12 and the battery 20 may be achieved through the heat conducting portion 30. The heat conducting portion 30 may be a thermally conductive structural adhesive, and the temperature adjustment plate 12 and the battery 20 are bonded through the thermally conductive structural adhesive, which can not only ensure the strength of the connection, but also can realize heat transfer, thereby improving the heat dissipation capability of the battery 20.

In an embodiment, the assembly method for the battery pack further includes: connecting the top cover 14 to the main frame 11, so that the temperature adjustment plate 12 is located between the top cover 14 and the battery 20, and the top cover 14 may seal and protect the battery box 10, thereby preventing the external structure from damaging the temperature adjustment plate 12.

The temperature adjustment plate 12 and the top cover 14 may be connected to the main frame 11 in sequence, or the temperature adjustment plate 12 and the top cover 14 may be connected first, and then the temperature adjustment plate 12 and the top cover 14 may be connected to the main frame 11 simultaneously. The temperature adjustment plate 12 may be directly connected to the main frame 11, or the temperature adjustment plate 12 may be indirectly connected to the main frame 11.

In an embodiment, the assembly method for the battery pack further includes: connecting the top cover 14 to the main frame 11, so that the temperature adjustment plate 12 is located between the top cover 14 and the battery 20. The top cover 14 is connected to one side of the main frame 11 away from the temperature adjustment plate 12, so that the temperature adjustment plate 12 and the top cover 14 seal the main frame 11, thereby realizing reliable protection of the battery 20. One side of the battery 20 provided with the pressure relief structure 21 and the terminal assembly 22 may be disposed toward the top cover 14.

In an embodiment, the top cover 14 serves as the clamping member. The top cover 14 is connected to the main frame 11, such that at least a part of the battery 20 is located between the top cover 14 and the support portion 111. The battery 20 is fixed through the top cover 14 and the support portion 111, such that the top cover 14 and the support portion 111 fix the battery 20. In this manner, the battery 20 may be reliably fixed between the top cover 14 and the support portion 111 to avoid problems such as shaking.

The top cover 14 may be in direct contact with the battery 20, or the top cover 14 may be in contact with the battery 20 through a buffer structure.

In an embodiment, the platen member 114 serves as the clamping member, and the platen member 114 is connected to the main frame 11, so that at least a part of the battery 20 is located between the platen member 114 and the support portion 111, and the battery 20 is fixed through the platen member 114 and the support portion 111. In this manner, the battery 20 may be reliably fixed on the platen member 114 and the support portion 111 to avoid problems such as shaking.

After the platen member 114 is connected to the main frame 11, the top cover 14 may be connected to the main frame 11. Alternatively, after the platen member 114 is connected to the main frame 11, the temperature adjustment plate 12 may be connected to the main frame 11. Alternatively, after the platen member 114 is connected to the main frame 11, the temperature adjustment plate 12 may be connected to the main frame 11, and the top cover 14 may be connected to the main frame 11.

The platen member 114 may be adjustably arranged relative to the position of the main frame 11. The platen member 114 is connected to the main frame 11. It may be that the position of the platen member 114 is adjusted so that the platen member 114 presses the battery 20 tightly. The platen member 114 may be detachably connected to the main frame 11. Connecting the platen member 114 to the main frame 11 may be performed by arranging the platen member 114 separated from the main frame 11 on the main frame 11.

In an embodiment, the assembly method for the battery pack is adopted to form the above-mentioned battery pack.

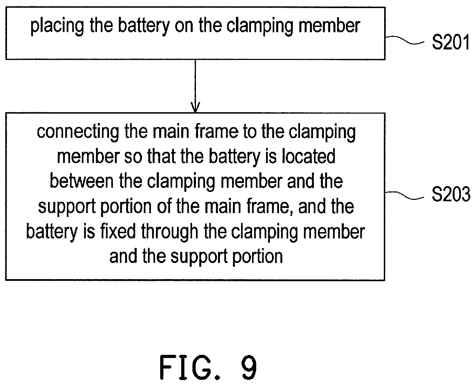

An embodiment of the present disclosure further provides an assembly method for a battery pack, please refer to FIG. 9. The assembly method for the battery pack includes the following steps.

S201, placing the battery 20 on the clamping member.

S203, connecting the main frame 11 to the clamping member, such that at least a part of the battery 20 is located between the clamping member and the support portion 111 of the main frame 11, and that the battery 20 is fixed through the clamping member and the support portion 111.

The assembly method for the battery pack in an embodiment of the present disclosure arranges the battery 20 between the clamping member and the support portion 111, so that the battery 20 may be fixed through the clamping member and the support portion 111, thereby improving the connection strength between the battery 20 and the battery box 10 and avoiding the battery 20 from shaking to improve the use performance of the battery pack.

It should be noted that the main frame 11 is provided with a support portion 111. When the battery is assembled, the battery 20 is placed on the clamping member, and the main frame 11 is subsequently connected to the clamping member, so that the position of the battery 20 is limited between the clamping member and the support portion 111, and the fixing of the battery 20 is realized.

In an embodiment, the assembly method for the battery pack further includes: connecting the bottom plate 13 to one side of the main frame 11 away from the clamping member, so that the bottom plate 13 can reliably protect the battery 20.

After the main frame 11 is connected to the clamping member, the opening of the main frame 11 faces upward, so that the bottom plate 13 may be directly connected to the main frame 11.

In an embodiment, the assembly method for the battery pack further includes: contacting the battery 20 with the clamping member through the buffer portion 40, so as to provide a certain buffering function for the battery 20 and prevent the clamping member from damaging the battery 20.

In an embodiment, the assembly method for the battery pack further includes: contacting the battery 20 with the support portion 111 through the buffer portion 40, so as to provide a certain buffering function for the battery 20 and prevent the support portion 111 from damaging the battery 20. The buffer portion 40 may be a rubber pad, a foam pad, etc., which is not limited in the disclosure. The buffer portion 40 may be bonded to the support portion 111, and the battery 20 may be bonded to the buffer portion 40.

In an embodiment, the step of placing the battery 20 on the clamping member includes arranging one side of the battery 20 provided with the pressure relief structure 21 and the terminal assembly 22 to face away from the clamping member. In this manner, after the main frame 11 is connected to the clamping member, one side of the battery 20 provided with the pressure relief structure 21 and the terminal assembly 22 is in contact with the support portion 111, so that the pressure relief structure 21 and the bottom plate 13 may be arranged at intervals. As such, it may be ensured that the pressure relief structure 21 may be broken through when the pressure inside the battery 20 reaches a certain level. Accordingly, the gas may be discharged from the inside of the battery 20 to avoid safety problems, and the terminal assembly 22 and the bottom plate 13 may be arranged at intervals, so as to ensure a safety distance between the terminal assembly 22 and the bottom plate 13, and prevent the bottom plate 13 from damaging the terminal assembly 22.

In an embodiment, the temperature adjustment plate 12 serves as the clamping member, the battery 20 is placed on the temperature adjustment plate 12, and the main frame 11 is connected to the temperature adjustment plate 12. At least a part of the battery 20 is located between the temperature adjustment plate 12 and the support portion 111 of the main frame 11. The battery 20 is fixed through the temperature adjustment plate 12 and the support portion 111, so that the battery 20 may be fixed through the temperature adjustment plate 12 and the support portion 111, so as to improve the connection strength of the battery 20 and the battery box 10, and avoid the battery 20 from shaking. Moreover, the temperature adjustment plate 12 may heat or cool the battery 20 reliably.

In an embodiment, the assembly method for the battery pack further includes: connecting the bottom plate 13 to one side of the main frame 11 away from the temperature adjustment plate 12, so that the temperature adjustment plate 12 and the bottom plate 13 seal the main frame 11, so that the battery 20 may be protected reliably.

In an embodiment, the assembly method for the battery pack further includes: before connecting the bottom plate 13 to one side of the main frame 11 away from the temperature adjustment plate 12, adjacent batteries 20 are connected through bus bars to realize direct series connection or parallel connection of the batteries 20.

In an embodiment, the assembly method for the battery pack further includes: contacting the temperature adjustment plate 12 with the battery 20 through the heat conducting portion 30, so that heat transfer between the temperature adjustment plate 12 and the battery 20 may be achieved through the heat conducting portion 30. The heat conducting portion 30 may be a thermally conductive structural adhesive, and the temperature adjustment plate 12 and the battery 20 are bonded through the thermally conductive structural adhesive, which can not only ensure the strength of the connection, but also can realize heat transfer, thereby improving the heat dissipation capability of the battery 20.

In an embodiment, the step of placing the battery 20 on the temperature adjustment plate 12 includes arranging one side of the battery 20 provided with the pressure relief structure 21 and the terminal assembly 22 to face away from the temperature adjustment plate 12. In this manner, after the main frame 11 is connected to the temperature adjustment plate 12, one side of the battery 20 provided with the pressure relief structure 21 and the terminal assembly 22 is in contact with the support portion 111. As such, the pressure relief structure 21 and the bottom plate 13 may be arranged at intervals, which may ensure that the pressure relief structure 21 can be broken through when the pressure inside the battery 20 reaches a certain level. Accordingly, the gas may be discharged from the inside of the battery 20 to avoid safety problems. Meanwhile, the terminal assembly 22 and the bottom plate 13 may be arranged at intervals, so as to ensure a safety distance between the terminal assembly 22 and the bottom plate 13, and to prevent the bottom plate 13 from damaging the terminal assembly 22.

In an embodiment, the assembly method for the battery pack further includes: connecting the top cover 14 to the main frame 11, so that the temperature adjustment plate 12 is located between the top cover 14 and the battery 20, and the top cover 14 may seal and protect the battery box 10, so as to prevent the external structure from damaging the temperature adjustment plate 12.

In an embodiment, the assembly method for the battery pack further includes: connecting the top cover 14 to one side of the main frame 11 away from the temperature adjustment plate 12, so that the temperature adjustment plate 12 and the top cover 14 seal the main frame 11, thereby achieving reliable protection of battery 20. One side of the battery 20 provided with the pressure relief structure 21 and the terminal assembly 22 may be disposed toward the top cover 14.

In an embodiment, the top cover 14 serves as the clamping member, the battery 20 is placed on the top cover 14, and the main frame 11 is connected to the top cover 14, so that at least a part of the battery 20 is located between the top cover 14 and the support portion 111, and the battery 20 is fixed through the top cover 14 and the support portion 111. In this manner, the top cover 14 and the support portion 111 may fix the battery 20, such that the battery 20 may be reliably fixed between the top cover 14 and the support portion 111 to avoid problems such as shaking.

The top cover 14 may be in direct contact with the battery 20, or the top cover 14 may be in contact with the battery 20 through a buffer structure.

In an embodiment, the platen member 114 serves as the clamping member, the battery 20 is placed on the platen member 114, and the main frame 11 is connected to the platen member 114, so that at least a part of the battery 20 is located between the platen member 114 and the support portion 111. Moreover, the battery 20 is fixed through the platen member 114 and the support portion 111, so that the battery 20 may be reliably fixed on the platen member 114 and the support portion 111, thereby avoiding problems such as shaking.

The platen member 114 may be adjustably arranged relative to the position of the main frame 11, and connecting the main frame 11 to the platen member 114 may be adjusting the position of the platen member 114. The platen member 114 may be detachably connected to the main frame 11, and connecting the main frame 11 to the platen member 114 may be arranging the main frame 11 separated from the platen member 114 on the platen member 114.

In an embodiment, the assembly method for the battery pack is adopted to form the above-mentioned battery pack.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative, and the real scope and spirit of the present disclosure is defined by the appended claims.

It should be understood that the disclosure is not limited to the precise structures that have been described above and shown in the drawings, and various modifications and variations can be made without departing from the scope thereof. The scope of the disclosure is limited only by the appended claims.

## Claims

1. A battery pack, comprising a battery box (10) and a battery (20), wherein the battery (20) is disposed in the battery box (10), and the battery box (10) comprises:
a main frame (11), including a support portion (111); and
a clamping member, connected to the main frame (11), wherein at least a part of the battery (20) is located between the clamping member and the support portion (111), such that the clamping member and the support portion (111) fix the battery (20).

2. The battery pack according to claim 1, wherein the battery box (10) further comprises a bottom plate (13), the bottom plate (13) is connected to the main frame (11), the support portion (111) is located between the clamping member and the bottom plate (13), and the battery (20) is disposed on the support portion (111).

3. The battery pack according to claim 2, wherein the battery (20) comprises a pressure relief structure (21), and the pressure relief structure (21) is disposed toward the bottom plate (13);
wherein the pressure relief structure (21) and the bottom plate (13) are arranged at intervals.

4. The battery pack according to claim 3, wherein the battery (20) further comprises a terminal assembly (22), the terminal assembly (22) and the pressure relief structure (21) are located on a same side of the battery (20), and one side of the battery (20) provided with the pressure relief structure (21) and the terminal assembly (22) is disposed on the support portion (111);
wherein the terminal assembly (22) and the bottom plate (13) are arranged at intervals.

5. The battery pack according to claim 2, wherein a distance between the support portion (111) and the bottom plate (13) is 0 mm to 20 mm.

6. The battery pack according to claim 2, wherein a buffer portion (40) is disposed between the support portion (111) and the battery (20).

7. The battery pack according to any one of claims 1-6, wherein the clamping member is a temperature adjustment plate (12), the temperature adjustment plate (12) is connected to the main frame (11), and at least the part of the battery (20) is located between the temperature adjustment plate (12) and the support portion (111), such that the temperature adjustment plate (12) and the support portion (111) fix the battery (20).

8. The battery pack according to claim 7, further comprising a heat conducting portion (30), and the heat conducting portion (30) is located between the temperature adjustment plate (12) and the battery (20), such that the temperature adjustment plate (12) is in contact with the battery (20) through the heat conducting portion (30).

9. The battery pack according to claim 8, wherein the heat conducting portion (30) is a thermally conductive adhesive.

10. The battery pack according to claim 7, wherein the battery box (10) further comprises a top cover (14), the top cover (14) is disposed opposite to the temperature adjustment plate (12) and is connected to the main frame (11).

11. The battery pack according to claim 1, wherein the clamping member is a top cover (14), and the top cover (14) is connected to the main frame (11), at least the part of the battery (20) is located between the top cover (14) and the support portion (111), such that the battery (20) is fixed through the top cover (14) and the support portion (111).

12. The battery pack according to claim 1, wherein the clamping member is a platen member (114), and the platen member (114) is connected to the main frame (11), at least the part of the battery (20) is located between the platen member (114) and the support portion (111), such that the battery (20) is fixed through the platen member (114) and the support portion (111).

13. The battery pack according to claim 12, wherein the platen member (114) is adjustably arranged relative to a position of the main frame (11), such that a distance between the platen member (114) and the support portion (111) is adjustable.

14. The battery pack according to claim 12, wherein the platen member (114) is detachably connected to the main frame (11).

15. The battery pack according to any one of claims 1-14, wherein the support portion (111) and at least a part of the main frame (11) are an integrally formed structure; or, the support portion (111) is detachably connected to the main frame (11).

16. The battery pack according to any one of claims 1-15, wherein the main frame (11) further comprises a side beam (112), and the support portion (111) extends from an inner side of the side beam (112).

17. The battery pack according to claim 16, wherein the main frame (11) further comprises a partition beam (113), the partition beam (113) is located at the inner side of the side beam (112), and the support portion (111) extends from the partition beam (113), the support portion (111) on the side beam (112) is arranged opposite to the support portion (111) on the partition beam (113).

18. The battery pack according to any one of claims 1-17, wherein the main frame (11) further comprises a side beam (112) and a partition beam (113), the partition beam (113) is located at an inner side of the side beam (112), and the support portion (111) extends from an inner side of at least one of the side beam (112) and the partition beam (113).

19. An assembly method for a battery pack, the assembly method comprising:
placing a battery (20) on a support portion (111) of a main frame (11); and
connecting a clamping member to the main frame (11), such that at least a part of the battery (20) is located between the clamping member and the support portion (111), and that the battery (20) is fixed through the clamping member and the support portion (111).

20. The assembly method for the battery pack according to claim 19, the assembly method further comprising:
connecting a bottom plate (13) to a side of the main frame (11) away from the clamping member.

21. The assembly method for the battery pack according to claim 20, the assembly method further comprising:
before connecting the bottom plate (13) to the side of the main frame (11) away from the clamping member,
inverting the main frame (11) and the clamping member, such that an opening of the main frame (11) faces upward;
wherein the bottom plate (13) blocks the opening of the main frame (11).

22. The assembly method for the battery pack according to claim 19, the assembly method further comprising:
contacting the battery (20) with the support portion (111) through a buffer portion (40).

23. The assembly method for the battery pack according to claim 19, wherein the step of placing the battery (20) on the support portion (111) of the main frame (11) comprises:
placing one side of the battery (20) provided with a pressure relief structure (21) and a terminal assembly (22) on the support portion (111).

24. The assembly method for the battery pack according to claim 19, wherein the clamping member serves as a temperature adjustment plate (12), and the temperature adjustment plate (12) is connected to the main frame (11), such that at least the part of the battery (20) is located between the temperature adjustment plate (12) and the support portion (111), and that the battery (20) is fixed through the temperature adjustment plate (12) and the support portion (111).

25. The assembly method for the battery pack according to claim 24, the assembly method further comprising:
contacting the temperature adjustment plate (12) with the battery (20) through a heat conducting portion (30).

26. The assembly method for the battery pack according to claim 24, the assembly method further comprising:
connecting a top cover (14) to the main frame (11), such that the temperature adjustment plate (12) is located between the top cover (14) and the battery (20).

27. The assembly method for the battery pack according to claim 19, wherein the clamping member serves as a top cove (14)r, and the top cover (14) is connected to the main frame (11), such that at least the part of the battery (20) is located between the top cover (14) and the support portion (111), and that the battery (20) is fixed through the top cover (14) and the support portion (111).

28. The assembly method for the battery pack according to claim 19, wherein the clamping member serves as a platen member (114), and the platen member (114) is connected to the main frame (11), such that at least the part of the battery (20) is located between the platen member (114) and the support portion (111), and that the battery (20) is fixed through the platen member (114) and the support portion (111).

29. An assembly method for a battery pack, the assembly method comprising:
placing a battery (20) on a clamping member; and
connecting a main frame (11) to the clamping member, wherein at least a part of the battery (20) is located between the clamping member and a support portion (111) of the main frame (11), and the battery (20) is fixed through the clamping member and the support portion (111).
